# EUROPEAN PATENT APPLICATION

(11) **EP 1 164 777 A2**
(43) Date of publication of application: **19.12.2001**
(21) Application number: 01304880.6
(22) Date of filing: 04.06.2001
(51) Int. Cl.: H04M 17/00

(54) **System and method for refreshing pre-paid accounts for wireless services**

(30) Priority: 06.06.2000 US 588368
(71) Applicant: Nortel Networks Limited, Montreal, Quebec H2Y 3Y4 (CA)
(72) Inventor: Obhan, Prem, Collin, Texas 75023 (US); Balcom, Russell, Collin, Texas 75075 (US)
(74) Representative: Jones, Keith William

(57) **Abstract**

A pre-paid account for wireless services is refreshed by a subscriber sending to a network a refresh data message comprising a feature code, a passcode, and a monetary quantity of funds. The network then directs a subscriber financial institution to transfer the monetary quantity of funds from a subscriber account at the subscriber financial institution to a subscriber pre-paid account at a network financial institution to be used for wireless services.

## Description

### TECHNICAL FIELD

The invention relates generally to maintaining accounts for wireless services and, more particularly, to a method and system for refreshing pre-paid accounts for wireless services.

### BACKGROUND

Pre-paid wireless phone service is a popular service that generally includes two main features. First, pre-paid wireless systems apply monetary deposits received from subscribers to the subscriber's wireless phone service account balance. Second, pre-paid wireless systems decrement a subscriber's account balance according to a rating plan when the subscriber uses the service. When the account is depleted, a subscriber must replenish the account with additional monetary funds. The act of replenishing the account is referred to as topping-up, recharging, or refreshing, the subscriber's account balance.

In conventional pre-paid billing systems, an Interactive Voice Response (IVR) based system is commonly available to enable subscribers to refresh their accounts. To establish an IVR service, a subscriber must provide information about a source of funds, such as a credit card account, a debit card account, or a bank account, from which funds may be withdrawn upon appropriate authorization from the subscriber.

When a subscriber's pre-paid account begins to run low, the wireless service provides a warning to the subscriber. The subscriber may then call into the IVR service to refresh his/her account with additional funds from his/her fund source. Such a call may be wireless or wireline. During the course of the call, the subscriber must navigate through a series of voice menus to establish his identity, provide security information (e.g., a passcode), and enter the monetary amount to be applied to the pre-paid account balance. The amount of funds specified are then transferred from the subscriber's fund source to the subscriber's wireless phone pre-paid account balance. The subscriber then receives confirmation from the IVR system that the account balance has been refreshed, and the call is ended.

There are a number of drawbacks associated with using IVR systems to refresh wireless account balances. For example, to use an IVR system, subscribers must remember a phone number, dial the number to enter into the IVR system, navigate through a number of voice-menu options, and enter their phone number, passcode, and monetary amount of funds to be transferred from the subscriber's fund source to the subscriber's wireless phone pre-paid account balance. As a consequence, IVR systems are cumbersome, inconvenient, and time consuming to use, and as a further consequence, pre-paid wireless phones are not used as much as they would otherwise be used. Furthermore, because a call to IVR may take require a couple of minutes of telephone usage time. Generally, the call usage time is handled as a toll free call paid for by the entity handling the account balance. Therefore, toll charges are incurred by the wireless phone company. Additionally, capital outlays are required to set up an IVR system.

Therefore, there is a need for a system by which a subscriber to wireless telephone services may refresh his/her pre-paid balance account in a less cumbersome, inconvenient, time consuming, and costly manner than is possible with conventional IVR systems.

### SUMMARY

The present invention, accordingly, provides a method which streamlines the process of refreshing a pre-paid account for wireless services provided by the network including receiving a first data message comprising a passcode and a request to transfer funds from a subscriber account at a subscriber financial institution to the pre-paid account at a network financial institution. A second data message is sent to the subscriber's financial institution directing that the funds be transferred from the subscriber account at the subscriber financial institution to the pre-paid account at the network financial institution. The subscriber financial institution could be a credit card account, a debit card account, a voucher account, a savings account or a cheque account, any of which may be held at a bank. The subscriber account may be a common account held by two or more subscribers. The first data message may be transmitted by wireless transmission, a web server or a packet based network from a mobile station, or a personal computer or a wireless Internet connection established with a mobile station having a web-based screen. The request to transfer funds may include a request to transfer the quantity of funds specified in the request. The method according to the invention may be performed by the network, more specifically by the mobility switch centre (MSC) of the network, even more specifically by an offboard service platform coupled to the MSC.

The present invention also provides for a computer program product which enables a network to refresh a pre-paid balance account for wireless services. The computer program product includes a medium with a computer program embodied thereon. The computer program comprises computer program code executable for receiving a first data message comprising a passcode and a request to transfer funds from a subscriber account at a subscriber financial institution to the pre-paid account at a network financial institution. The computer program further comprises computer program code executable for sending a second data message to the subscriber financial institution directing that the funds be transferred from the subscriber account at the subscriber financial institution to the pre-paid account at the network financial institution. The computer program may reside in a mobility switch centre (MSC) of the network, more specifically in an offboard service platform coupled to the MSC.

The present invention may be embodied in a system comprising a mobile station (MS) configured for receiving from a subscriber keystroke entries which constitute at least a passcode, the MS being configured for transmitting to the network the at least a passcode in a data message requesting that funds be transferred from a subscriber account at a subscriber financial institution to the pre-paid account at a network financial institution. A wireless network is configured for receiving the data message transmitted from the MS, and for sending a message to the subscriber financial institution directing that the funds be transferred from the subscriber account at the subscriber financial institution to the pre-paid account at the network financial institution. The subscriber financial institution is configured for receiving the message sent from the network, and for transferring the funds from the subscriber account at the subscriber financial institution to the pre-paid account at the network financial institution. The network financial institution is configured for receiving the funds transferred from the subscriber account at the subscriber financial institution, and for crediting the pre-paid account with the funds received.

By the use of the present invention, a subscriber to wireless telephone services may refresh his/her pre-paid balance account in a less cumbersome, more convenient, easier-to-use, and less expensive manner than is possible with conventional systems. As a further consequence, subscribers will tend to refresh their accounts more frequently, and wireless service providers will receive increased revenues.

### BRIEF DESCRIPTION OF THE DRAWINGS

For a more complete understanding of the present invention, and the advantages thereof, reference is now made to the following descriptions taken in conjunction with the accompanying drawings, in which:
FIGURE 1 is a schematic diagram of a prior art network;
FIGURES 2A and 2B are a flow chart illustrating control logic which may be implemented on the network of FIG. 1 for refreshing a pre-paid account in accordance with principles of the present invention;
FIGURES 3-5 exemplify keystroke sequences that may be executed in accordance with the control logic set forth in FIGS. 2A and 2B;
FIGURES 6-8 exemplify response messages that may be generated in accordance with the control logic set forth in FIGS. 2A and 2B;
FIGURES 9A and 9B are a flow chart illustrating control logic which may be implemented on the network of FIG. 1 for refreshing a pre-paid account in accordance with principles of an alternate embodiment of the present invention;
FIGURE 10 exemplifies a request message that may be generated in accordance with the control logic set forth in FIGS. 9A and 9B.

### DETAILED DESCRIPTION

In the following discussion, numerous specific details are set forth to provide a thorough understanding of the present invention. However, it will be obvious to those skilled in the art that the present invention may be practiced without such specific details. In other instances, well-known elements have been illustrated in schematic or block diagram form in order not to obscure the present invention in unnecessary detail. Additionally, for the most part, details concerning wireless communication networks, pre-paid services, and the like, have been omitted inasmuch as such details are not deemed necessary to obtain a complete understanding of the present invention, and are within the skills of persons of ordinary skill in the relevant art.

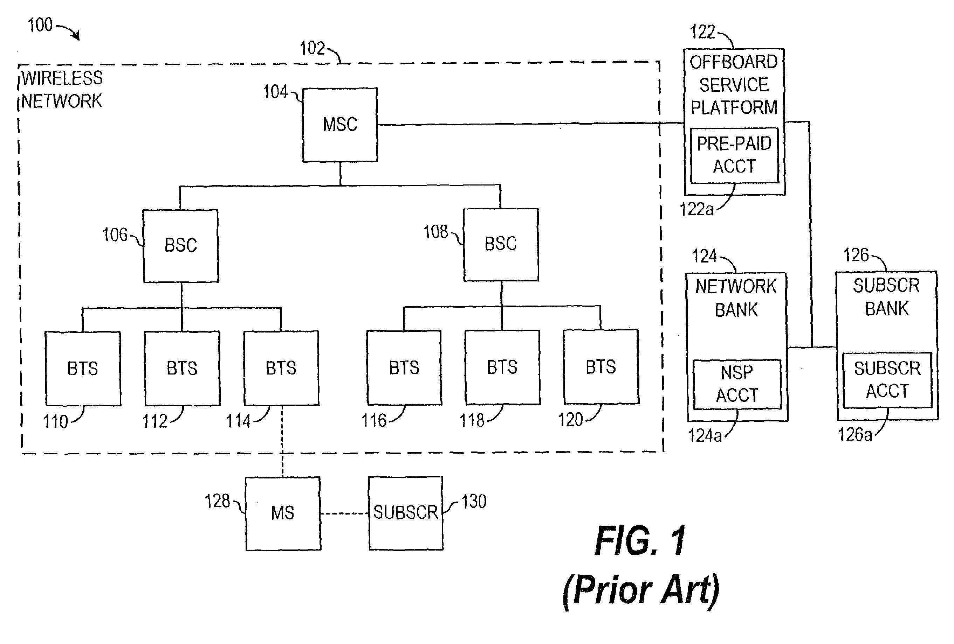

Referring to FIGURE 1 of the drawings, the reference numeral 100 generally designates a pre-paid wireless communication network embodying features of the prior art. The system 100 includes a wireless communication network 102 comprising a Mobility Switch Centre (MSC) 104, two Base Station Controllers 106 and 108 connected for communication with the MSC 104, three Base Transceiver Stations (BTS's) 110, 112, and 114 connected for communication with the BSC 106, and three BTS's 116, 118, and 120 connected for communication with the BSC 108. A conventional offboard service platform (OSP) 122 is electronically coupled for communication with the MSC 104 using a well-known messaging protocol standard, such as IS-41, GSM MAP, or the like. A network bank 124 and a subscriber bank 126 are electronically coupled to the offboard service platform 122 via well-known electronic monetary transfer protocols. A mobile station (MS) 128 of a subscriber 130 is positioned in wireless communication proximity with the BTS 112.

The offboard service platform 122 includes a subscriber pre-paid account 122a in which a pre-paid balance account for the subscriber 130 is maintained, as discussed further below. The network bank 124 is a financial institution at which a network service provider (NSP, not shown) account 124a is located which holds monetary funds credited to the NSP responsible for operating the network 102. The subscriber bank 126 is a financial institution, such as a conventional bank, a credit card clearing house, or the like, at which an account 126a is located which holds monetary funds credited to the subscriber 130. By way of a pre-paid wireless services agreement (not shown) established between the NSP that operates the network 102 and the subscriber 130, with proper authorization, a specified quantity of monetary funds may be transferred from the subscriber account 126a at the subscriber bank 126 to the NSP account 124a at the network bank 124, which funds are credited as pre-paid services for the subscriber 130 in the subscriber pre-paid account 122a at the offboard service platform 122.

The foregoing description of the wireless communication network 102 comprising MSC's, BSC's, BTS's, MS's, and the like, and pre-paid services between the operators of the network 102 and the subscriber 130, are considered to be well-known in the art and, therefore, will not be discussed in further detail herein, except where pertinent to a fuller understanding of the present invention.

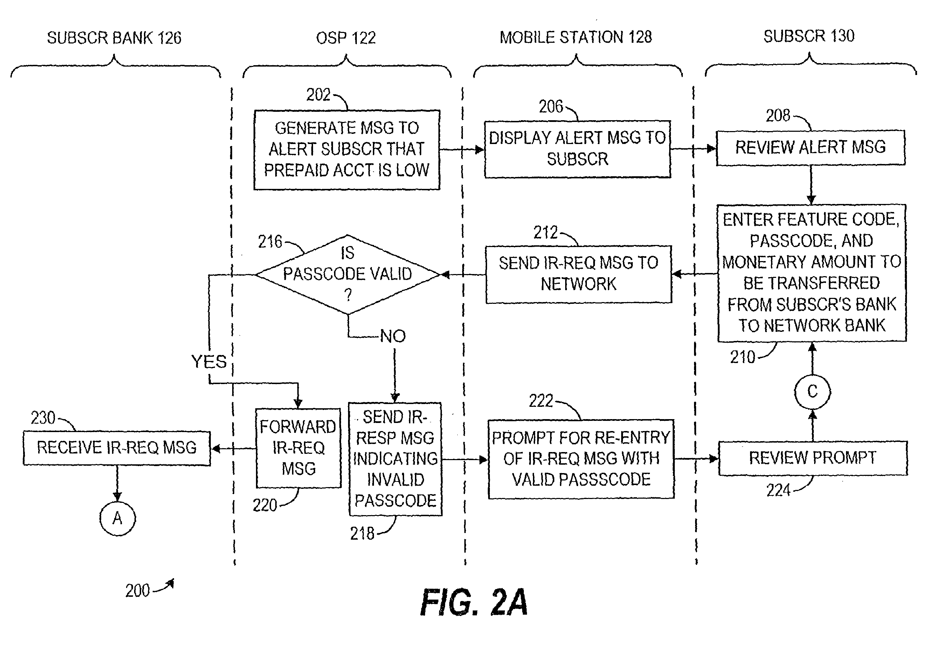

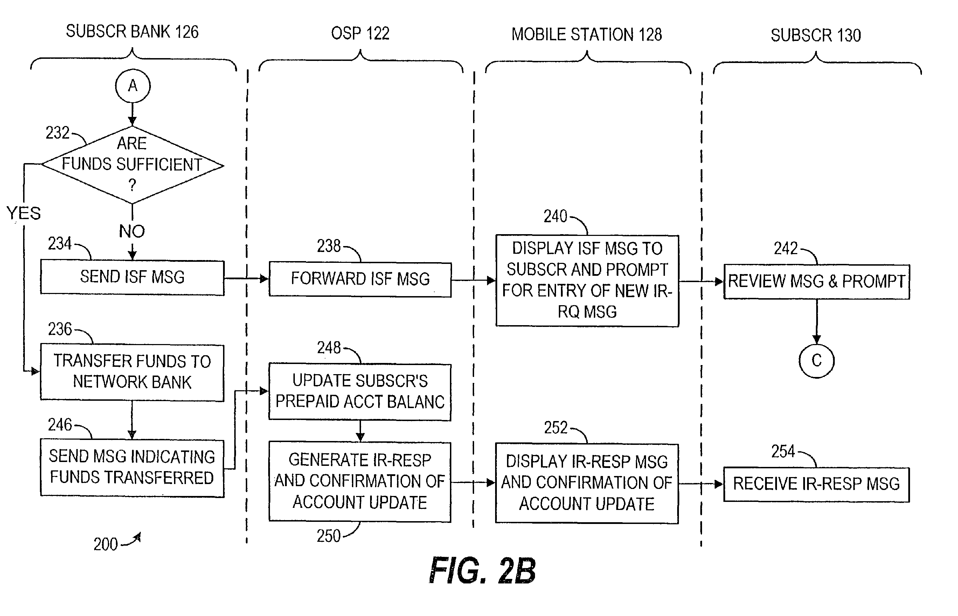

FIGURES 2A and 2B depict a preferred high-level flowchart 200 of representative steps executable by the subscriber 130, the MS 128, the offboard service platform 122, and the subscriber bank 126, for enabling a subscriber to wireless telephone services over the network 102 to refresh his/her pre-paid balance account 122a using a Wireless Intelligent Network (WIN) standard in accordance with the present invention. The steps executable by the offboard service platform 122 are executed by a computer program embodied on a medium (not shown) which resides in the offboard service platform 122. In step 202, the offboard service platform 122 monitors, in a manner well-known in the art, the wireless services used by the subscriber 130 against the monetary funds credited in the pre-paid account 122a of the subscriber 130. When the monetary funds credited in the pre-paid account 122a balance of the subscriber 130 fall below a minimum threshold, such as the monetary funds required to hold a voice channel for three minutes or to transmit 100,000 bytes of data, the offboard service platform 122 generates an alert message to the MS 128 via the network 102 (exemplified in FIG. 1 as the MSC 104, the BSC 106, and the BTS 114) in a conventional manner.

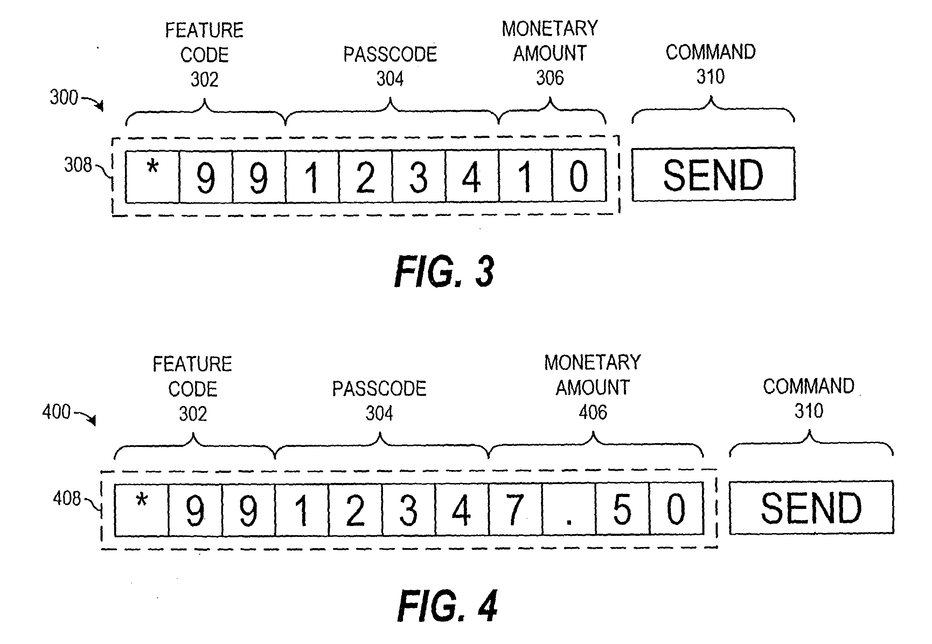

In step 206, the MS 128 displays the alert message received in step 202 to the subscriber 130 and, in step 208, the subscriber 130 reviews the alert message. If desired, the subscriber 130 may, in step 210, respond to the alert message by entering data into the MS 128, via a sequence of keystrokes, which data may be used by the MS to form an Instant Refresh Request (IR-REQ) message. Three such keystroke sequences, designated by the reference numerals 300, 400, and 500, are exemplified in FIGURES 3-5, respectively. With respect to FIGURE 3, the subscriber 130 enters into the MS 128 a feature code 302, such as "*99", followed by a passcode 304, such as "1234", and a monetary amount 306 of funds, such as $7.50, to be transferred from the account 126a at the subscriber's bank 126 to the NSP account 124a at the network bank 124. The feature code 302, passcode 304, and monetary amount 306 constitute an IR-REQ message 308, shown in dashed outline in FIG. 3. The subscriber 130 may depress a "SEND" button 310 (understood to be located on the MS 128, though not so shown) to direct the MS 128 to transmit the entered IR-REQ message 308 to the BTS 114.

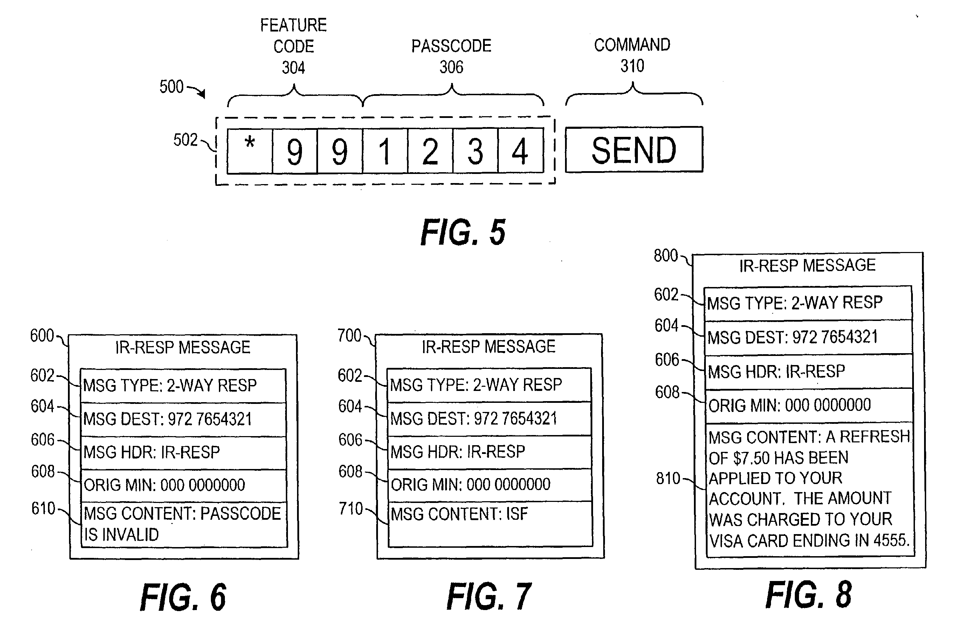

FIGURES 4 and 5 exemplify alternative keystroke sequences to those depicted in FIG. 3. Specifically, FIG. 4 depicts a sequence 400 in which a subscriber 130 enters a fractional monetary amount 406 of funds by way of a decimal point. FIG. 5 depicts a sequence 500 in which a subscriber 130 does not enter a monetary amount of funds prior to depressing the SEND key 310. FIG. 5 requires that a subscriber 130 have arranged with the operators of the network for a predetermined default monetary amount of funds, such as $10, to be transferred if the subscriber 130 does not otherwise specify a monetary amount, thereby further simplifying the process required to refresh the prepaid account 122a.

Referring back to FIG. 2A, upon depressing the SEND key 310 (FIG. 3) in step 210, the MS 128 transmits, in step 212, the entered IR-REQ message 308 via the network 102 to the offboard service platform 122, in a conventional manner.

In step 216, the offboard service platform 122 determines whether or not the passcode 304 is valid. If it determines that the passcode 304 is not valid, then execution proceeds to step 218; otherwise, execution proceeds to step 220, discussed below. In step 218, an Instant Refresh Response (IR-RESP) message 600, depicted in FIGURE 6, is sent via the network 102 to the MS 128 to indicate that the entered passcode is invalid. The IR-RESP message 600 preferably comprises a message type field 602, a message destination field 604, a message header field 606, an origination mobile identification number (MIN) field 608, and a message content field 610. The message type field 602 indicates the type of message, exemplified in FIG. 6 as being a 2-way response message. The message destination field 604 indicates the number of the phone (*i*.*e*., the MS 128) to which the IR-RESP message is destined, exemplified in FIG. 6 as being the phone number (972) 765-4321 of the MS 128. The message header field 606 identifies the message 600 as being an IR-RESP message. The origination MIN field 608 identifies the MIN of the MS 128 that generated the message 308, 408, or 502 to which the IR-RESP message 600 is responding. If the MIN is the same as the message destination 604, then the origination MIN is zeroed out (*i*.*e*., filled with 0's), as shown in FIG. 6. The message content field 610 is configured to hold a message exemplified in FIG. 6 as indicating that the passcode is invalid.

Upon receipt of the IR-RESP message 600, the MS 128, in step 222, displays to the subscriber 130 the content field 610 of the IR-RESP message 600 indicating that the passcode is invalid, and prompts the subscriber 130 to re-enter the IR-REQ message 308, 408, or 502, with a valid passcode 306. In step 224, the subscriber 130 reviews the message from the MS 128 and, if the subscriber 130 desires to re-enter a new passcode 306, or execution returns to step 210.

Upon a determination in step 216 that the passcode 306 is valid, the IR-REQ message is forwarded in step 220 from the offboard service platform 122 to the subscriber bank 126. In step 230, the subscriber bank 126 receives the IR-REQ message and, in step 232, the subscriber bank 126 determines whether the account 126a of the subscriber 130 contains the monetary amount 306 of the IR-REQ message 308, 408, or 502. If funds are insufficient, then execution proceeds to step 234; otherwise, execution proceeds to step 236, discussed below. In step 234, the subscriber bank 126 sends an insufficient funds (ISF) message to the offboard service platform 122 indicating that the subscriber account 126a does not contain the requested monetary funds. In step 238, the offboard service platform 122 receives the ISF message and generates a corresponding IR-RESP message 700, exemplified in FIGURE 7, to the MS 128 via the network 102. The IR-RESP message 700 is similar to the invalid passcode message 600 (FIG. 6), but instead includes a message content field 710 containing an "ISF Funds" message indicating that there are insufficient funds in the subscriber's account 126a to cover the monetary amount 306 requested.

In step 240, the MS 128 displays to the subscriber 130 the content field 710 of the IR-RESP message 700 indicating insufficient funds, and prompts the subscriber 130 to re-enter the IR-REQ message 308, 408, or 502, with a lesser monetary amount 306. In step 242, the subscriber reviews the message from the MS 128 and, if the subscriber 130 desires to re-enter a new IR-RESP message 308, 408, or 502 with a lesser monetary amount 306, execution returns to step 210.

If, in step 232, the subscriber bank 126 determines that the account 126a of the subscriber 130 does contain the monetary amount 306 of the IR-REQ message 308, 408, or 502, then execution proceeds to step 236 wherein monetary funds are withdrawn from the subscriber account 126a at the subscriber bank 126 and transferred to the NSP account 124a at the network bank 124 (FIG. 1) in a conventional manner.

Upon the transfer of funds in step 236, execution proceeds to step 246 wherein the subscriber bank 126 sends a message to the offboard service platform 122 indicating that the requested monetary funds have been transferred from the subscriber account 126a to the NSP account 124a.

In step 248, the offboard service platform 122 receives from the subscriber bank 126 the message indicating that the requested monetary funds have been transferred from the subscriber account 126a to the NSP account 124a. In response, the offboard service platform 122 updates for wireless services the subscriber's prepaid account 122a and, in step 250, generates to the MS 128 via the network 102 an IR-RESP message 800, exemplified in FIGURE 8, which confirms the transfer of monetary funds. The IR-RESP message 800 comprises fields identical to the fields 602, 604, 606, and 608 described above with respect to FIG. 6 and, additionally, comprises a message content field 810. As exemplified in FIG. 8, the message content field 810 indicates that a monetary amount of $7.50 (as specified from IR-REQ message 408) has been credited to the subscriber's pre-paid account 122a balance, and that that amount was charged to the subscriber account 126a at the subscriber bank 126. Preferably, an identifying portion of the number of the subscriber's account 126a at the subscriber bank 126 is also displayed in the IR-RESP message 800. The offboard service platform 122 then forwards to the subscriber 130 the IR-RESP message 800 via the network 102.

In step 252, the MS 128 displays the message content field 810 of the IR-RESP message 800, and in step 254, the subscriber receives and reviews the displayed message.

Upon completion of step 250, the offboard service platform 122 enters into a waiting state (not shown) until the monetary funds in the account 122a balance of the subscriber 130 again fall below the minimum threshold discussed above, at which point the offboard service platform 122 returns to step 202 and generates an alert message to the subscriber 130.

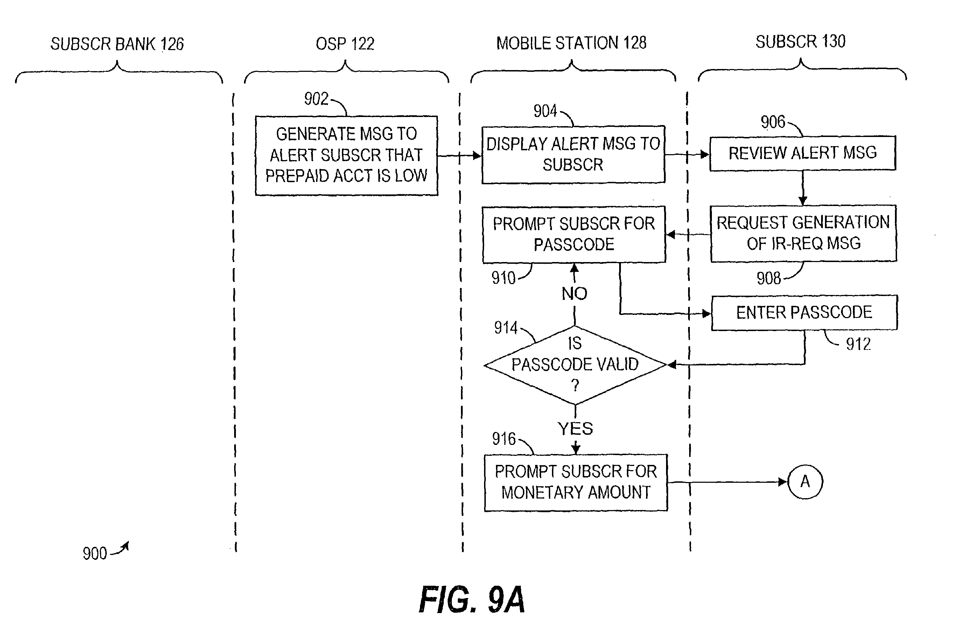

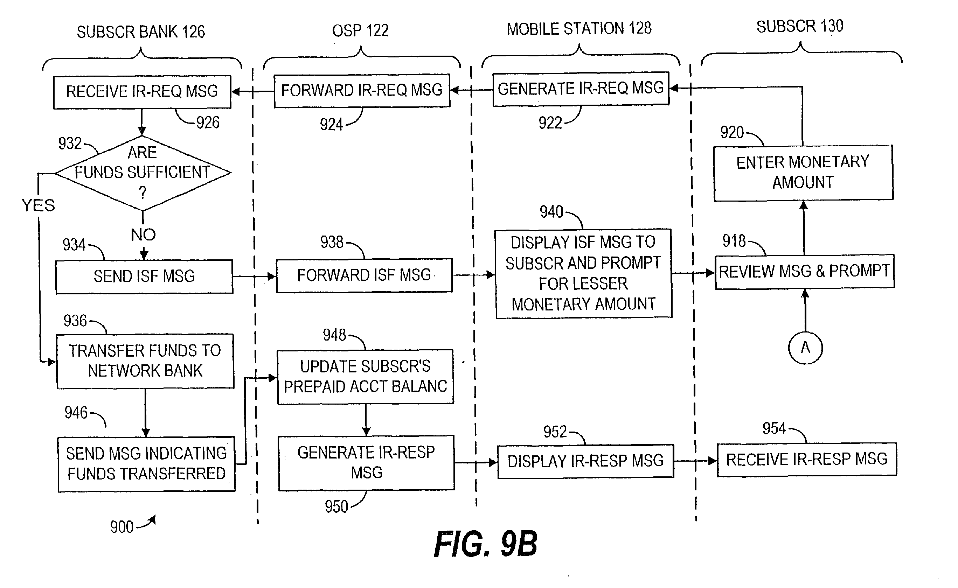

FIGURES 9A and 9B depict an alternate high-level flowchart 900 of representative steps executable by the subscriber 130, the MS 128, the offboard service platform 122, and the subscriber bank 126, for enabling a subscriber to wireless telephone services over the network 102 to refresh his/her pre-paid account 122a using a Short Message Service (SMS) standard in accordance with the present invention. The steps executable by the offboard service platform 122 are executed by a computer program embodied on a medium (not shown) which resides in the offboard service platform 122. In step 902, the offboard service platform 122 monitors, in a manner well-known in the art, the wireless services used by the subscriber 130 against the monetary funds credited in the pre-paid account 122a of the subscriber 130. When the monetary funds credited in the pre-paid account 122a balance of the subscriber 130 fall below a minimum threshold, such as the monetary funds required to hold a voice channel for three minutes or to transmit 100,000 bytes of data, the offboard service platform 122 generates an alert message to the MS 128 via the network 102 in a conventional manner.

In step 904, the MS 128 displays the alert message received in step 902 to the subscriber 130 and, in step 906, the subscriber reviews the alert message. If desired, the subscriber 130 may, in step 908, request in any conventional manner that the MS 128 prompt the subscriber 130 for input necessary to generate an IR-REQ message. In step 910, the MS 128 prompts the subscriber for a passcode and, in step 912, the subscriber 130 enters the passcode by entering data into the MS 128, via a sequence of keystrokes.

In step 914, the MS 128 determines whether the entered passcode is valid. If it determines that the passcode is not valid, then execution returns to step 910. If the MS 128 determines that the passcode is valid, then execution proceeds to step 916.

In step 916, the MS 128 prompts the subscriber 130 for a monetary quantity of funds, such as $7.50, to be transferred from the account 126a at the subscriber's bank 126 to the NSP account 124a at the network bank 124. In step 918, the subscriber 130 reviews the message and prompt and, if he/she desires, in step 920, he/she may enter a desired monetary quantity of funds.

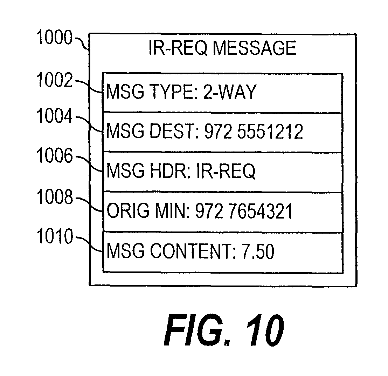

In step 922, the MS 128 uses the information entered by the subscriber 130 in step 920 to generate to the offboard service platform 122 via the network 102 an IR-REQ message, such as an IR-REQ message 1000 exemplified in FIGURE 10. The IR-REQ message 1000 preferably comprises a message type field 1002, a message destination field 1004, a message header field 1006, an origination MIN field 1008, and a message content field 1010, which are similar to the massage type field 602, the message destination field 604, the message header field 1006, origination MIN field 608, and a message content field 610, respectively, as discussed above with respect to FIG. 6. As exemplified in FIG. 10, the message type field 1002 identifies the message 1000 as a 2-way message, the message destination field 1004 identifies the destination phone number as (972) 555-1212 of the network 102, the message header field 1006 identifies the message 1000 as being an IR-REQ message, the origination MIN field 1008 identifies the MIN of the MS 128 as (972) 765-4321, and the message content field 1010 contains the monetary quantity of funds, exemplified herein as $7.50, to be transferred from the subscriber bank 126 to the network bank 124. If a subscriber 130 does not enter a monetary quantity, then the MS 128 may enter a predetermined default monetary amount of funds, such as $10, to be transferred, thereby further simplifying the process of refreshing a prepaid account 122a balance. Alternatively, if the subscriber 130 does not enter a monetary quantity, the MS 128 may enter zero, and the network 102 may enter a predetermined default monetary amount of funds, such as $10, to be transferred. The MS 128 then transmits the message 1000 to the offboard service platform 122. In step 924, the offboard service platform 122 then forwards the message 1000 to the subscriber bank 126, and the subscriber bank receives the IR-REQ message in step 926.

In step 932, the subscriber bank 126 determines whether the account 126a of the subscriber 130 contains the funds that the subscriber 130 has requested to be transferred per the field 1010 of the IR-REQ message 1000. If funds are insufficient, then execution proceeds to step 934; otherwise, execution proceeds to step 936.

In step 934, the subscriber bank 126 generates an a message to the offboard service platform 122 indicating that the subscriber bank 126 does not contain the monetary quantity of funds requested in the message content field 1010. In step 938, the offboard service platform 122 receives the message sent in step 934, and generates an IR-RESP message 700, as exemplified above in FIGURE 7, and forwards the IR-RESP message 700 to the MS 128 via the network 102. In step 940, the MS 128 displays to the subscriber 130 the message indicating insufficient funds, and prompts the subscriber 130 to re-enter a lesser monetary amount to transfer. Execution then returns to step 918.

If, in step 932, the subscriber bank 126 determines that the account 126a of the subscriber 130 does contain the monetary quantity requested in the field 1010 of the IR-REQ message 1000, then execution proceeds to step 936 wherein monetary funds are withdrawn from the account 126a of the subscriber bank 126 and transferred to the NSP account 124a of the network bank 124 (FIG. 1) in a conventional manner. Upon completion of the transfer of funds in step 936, execution proceeds to step 946 wherein the subscriber bank 126 generates a message to the offboard service platform 122 indicating that the requested funds have been transferred.

In step 948, the offboard service platform 122 receives the message generated in step 946 and updates the subscriber's pre-paid account 122a for wireless services. In step 950, the offboard service platform 122 generates and forwards to the subscriber 130 via the network 102 an IR-RESP message 800, exemplified in FIG. 8, confirming that the subscriber's pre-paid account 122a has been updated with the requested monetary quantity requested in the field 1010 of the IR-REQ message 1000. In step 952, the MS 128 displays the IR-RESP message 800 is displayed, and in step 954, the subscriber receives and reviews the displayed message.

Upon completion of the step 950, the offboard service platform 122 enters into a waiting state (not shown) until the monetary funds in the account 122a of the subscriber 130 again fall below the minimum threshold discussed above, at which point the network 102 returns to step 902 and generates an alert message to the subscriber 130.

By the use of the present invention, a system and method are provided by which a subscriber to wireless telephone services may refresh his/her pre-paid balance account in a less cumbersome, less time consuming, less costly, and more convenient manner than is possible with conventional IVR systems. As a further consequence, subscribers will tend to refresh their accounts more frequently, and wireless service providers will receive increased revenues.

It is understood that the present invention may take many forms and embodiments. Accordingly, several variations may be made in the foregoing without departing from the spirit or the scope of the invention. For example, the subscriber 130 may initiate and execute step 210 at any time, without being prompted by the MS 128. A subscriber may refresh a common account held by several subscribers, or accounts other than his own, such as an account of a family member, by entering additional information about the additional account he/she would like to refresh, and directing the funds to be transferred to the additional account. The event of refreshing a prepaid account may be achieved through a web server, a packet based network, or the like, interfaced through the MS, a personal computer, a home phone, or wireless Internet connection made with the MS using Wireless Access Protocol (WAP) and a web-based screen. The MS 128 may be preprogrammed to send an IR-REQ message by just pressing one or two keys on the MS. The alert message generated in steps 202 or 902 may be in the form of a voice message on the MS 128 and may be generated while a call is in progress at a predetermined time prior to expiration of prepaid services; and the MS 128 may be configured to transmit a verbal "yes" response received from the subscriber 130, or to generate a preprogrammed response message upon depression of a preprogrammed key on the MS by the subscriber 130, which responses may be transparent to another party to which the subscriber may be conversing during such an event. A subscriber may specify one of a number of different accounts from which monetary funds may be transferred to refresh a pre-paid account. A subscriber may specify whether voice and/or data services are being purchased. The predetermined quantity of monetary funds may be determined based on which one of a number of different passcodes a subscriber uses when refreshing an account, thereby obviating the need to enter a monetary amount. A number of different feature codes may be used to implement the present invention, wherein each feature code corresponds to a type of subscriber account from which monetary funds are drawn, such accounts including voucher accounts, credit card accounts, debit card accounts, bank savings and/or checking accounts, and the like. The IR-RESP message may be in the form of a voice message or a distinctive ring, rather than a text message as exemplified in FIGS. 6-8. The offboard services platform 122 may be bypassed and the MSC 104 may be coupled directly to the network bank 124 and to the subscriber bank 126. The functions performed by the offboard service platform 122 may instead be performed by the MSC 104 or another other suitable component of the network 100, and the network 100 may optionally be configured without the offboard service platform 122 by coupling the network bank 124 and subscriber bank 126 directly to a suitable component of the network 102, such as the MSC 104, for example. The determination of passcode validity made in step 914 by the MS 128 may instead be performed by the offboard service platform 122.

Having thus described the present invention by reference to certain of its preferred embodiments, it is noted that the embodiments disclosed are illustrative rather than limiting in nature and that a wide range of variations, modifications, changes, and substitutions are contemplated in the foregoing disclosure and, in some instances, some features of the present invention may be employed without a corresponding use of the other features. Many such variations and modifications may be considered obvious and desirable by those skilled in the art based upon a review of the foregoing description of preferred embodiments. Accordingly, it is appropriate that the appended claims be construed broadly and in a manner consistent with the scope of the invention.

## Claims

1. A method for refreshing a pre-paid account for wireless services provided by a network, comprising the steps of:
receiving a first data message comprising a passcode and a request to transfer funds from a subscriber account at a subscriber financial institution to the pre-paid account at a network financial institution; and
sending a second data message to the subscriber financial institution directing that the funds be transferred from the subscriber account at the subscriber financial institution to the pre-paid account at the network financial institution.

2. A method according to claim 1 further comprising the steps of:
receiving a third data message confirming that the funds were transferred from the subscriber account at the subscriber financial institution to the pre-paid account at the network financial institution; and
sending a fourth data message to the subscriber confirming that the subscriber's account balance has been refreshed.

3. A method according to claim 1 or claim 2 wherein the first data message further comprises a feature code indicating that the first message is a refresh message.

4. A method according to any of claims 1 to 3 wherein the request to transfer funds comprises a request to transfer a predetermined quantity of funds.

5. A method according to any of claims 1 to 4 wherein the step of receiving a first data message further comprises receiving a first data message comprising one of one or more passcodes, each of which passcodes corresponds to a respective predetermined quantity of funds to transfer from a subscriber account at a subscriber financial institution to the pre-paid account at a network financial institution.

6. A method according to any of claims 1 to 5 wherein the recited steps are implemented using short message service (SMS) protocols.

7. A method according to any of claims 1 to 5 wherein the recited steps are implemented using wireless intelligent network (WIN) protocols.

8. A method according to any of claims 1 to 7 further comprising:
the subscriber entering a passcode into a mobile station; and
the mobile station sending to the network a refresh data message comprising the feature code, passcode, and monetary quantity of funds entered by the subscriber.

9. A method according to any of claims 1 to 7 further comprising:
the subscriber entering into a mobile station a feature code, a passcode, and a monetary quantity of funds; and
the mobile station sending to the network a refresh data message comprising the feature code, passcode, and monetary quantity of funds entered by the subscriber.

10. A computer program product for enabling a subscriber to refresh a pre-paid balance account for wireless services, the computer program product having a medium with a computer program embodied thereon, the computer program comprising computer program code executable for performing any of the steps involved in a method according to any of claims 1 to 9.

11. A wireless network for enabling a subscriber to refresh a pre-paid account for wireless services, comprising:
a receiver unit configured for receiving data signals from a mobile station (MS), the data signals comprising a passcode and a request that funds be transferred from a subscriber account at a subscriber financial institution to the pre-paid account at a network financial institution; and
a sender unit interconnected with the receiver unit and configured for sending, in response to receipt of the data signals, a message to the subscriber financial institution directing that the funds be transferred from the subscriber account at the subscriber financial institution to the pre-paid account at the network financial institution.

12. A network according to claim 11 wherein the subscriber financial institution is configured for receiving the message sent from the sender unit, and for transferring the funds from the subscriber account at the subscriber financial institution to the pre-paid account at the network financial institution.

13. A network of according to claim 11 or claim 12 wherein the network financial institution is configured for receiving the funds transferred from the subscriber account at the subscriber financial institution, and for crediting the pre-paid account with the funds received.

14. A network according to claim 13 wherein the network financial institution is configured for sending to the receiver unit a message confirming that the funds were transferred from the subscriber account at the subscriber financial institution to the pre-paid account at the network financial institution; and wherein the sending unit is configured for sending a data message to the MS confirming that the pre-paid account has been refreshed.

15. A network according to any of claims 11 to 14 wherein the MS is configured for sending the data message to the receiver unit using a wireless transmission, a web server or a packet based network.

16. A network according to any of claims 11 to 15 wherein the data signals from the MS further comprises a feature code indicating that the data signals constitute a refresh message.

17. A network according to any of claims 11 to 16 wherein the funds to be transferred are a predetermined quantity of funds.

18. A network according to any of claims 11 to 17 wherein the data signals transmitted from the MS comprise one of one or more passcodes, each of which passcodes corresponds to a respective predetermined quantity of funds to transfer from the subscriber account at a subscriber financial institution to the pre-paid account at a network financial institution.

19. A network according to any of claims 11 to 18 wherein the network comprises a Mobility Switch Centre (MSC) for receiving the data signals from the MS, and for sending a message to the subscriber financial institution.

20. A network according to claim 19 wherein the Mobility Switch Centre (MSC) is coupled to an offboard service platform coupled for receiving the data signals from the MS and for sending a message to the subscriber financial institution.

21. A system configured for enabling a subscriber to refresh a pre-paid account for wireless services, comprising:
a mobile station (MS) configured for receiving from a subscriber keystroke entries which constitute at least a passcode, the MS being configured for transmitting to the network the at least a passcode in a data message requesting that funds be transferred from a subscriber account at a subscriber financial institution to the prepaid account at a network financial institution;
a wireless network configured for receiving the data message transmitted from the MS, and for sending a message to the subscriber financial institution directing that the funds be transferred from the subscriber account at the subscriber financial institution to the pre-paid account at the network financial institution;
the subscriber financial institution configured for receiving the message sent from the network, and for transferring the funds from the subscriber account at the subscriber financial institution to the pre-paid account at the network financial institution; and
the network financial institution configured for receiving the funds transferred from the subscriber account at the subscriber financial institution, and for crediting the pre-paid account with the funds received.

22. A wireless network for performing a method according to any of claims 1 to 9.

23. A wireless network comprising a mobility switch centre (NWC), in which the computer program product according to claim 9 resides.

24. A network according to claim 23 wherein the MSC is coupled to an offboard services platform in which the computer program resides.

25. A receiver unit for a network according to any of claims 11 to 20.

26. A sender unit for a network according to any of claims 11 to 20.
